# EUROPEAN PATENT SPECIFICATION

(11) **EP 1 770 482 B1**
(45) Date of publication and mention of the grant of the patent: **12.08.2009**
(21) Application number: 05108962.1
(22) Date of filing: 28.09.2005
(51) Int. Cl.: G06F 3/023, G06F 3/048

(54) **Apparatus with multiple highlights**
Vorrichtung mit mehrfachen Hervorhebungen
Dispositif ayant plusieurs zones mises en surbrillance

(43) Date of publication of application: 04.04.2007
(73) Proprietor: Sony Ericsson Mobile Communications AB, 221 88 Lund (SE)
(72) Inventor: Thoresson, Johan, 227 38, Lund (SE)
(74) Representative: Aurell, Henrik

(56) References cited:
- EP-A- 1 130 502
- EP-A- 1 387 243
- US-A1- 2004 080 487
- US-A1- 2004 174 400

## Description

### Field of the invention

The present invention relates to an apparatus, such as a mobile telephone with a non-touch screen, in which more than one item displayed on the a screen are highlighted simultaneously. One highlighted item may be selected by means of dedicated selection keys or softkeys.

### State of the art

In handheld devices with non-touch screens, navigation in lists and matrixes is a central part of the user interface and is usually based on a logical and physical highlight that distinguishes one item from another. The highlight can be controlled with some sort of navigation input device, such as a joystick, rocker key or disc jog etc. There are typically also a number of hard keys or softkeys, context sensitive or not, that relate to the item that is highlighted, enabling the user to perform actions of different kinds with the highlighted item. Typically, there are one or two actions that can be performed immediately and other actions available can be found in an option or "more" list.

EP-A-1 130 502 shows a highlight being used to progressively select ever narrower sub-ranges until a desired item is selected.

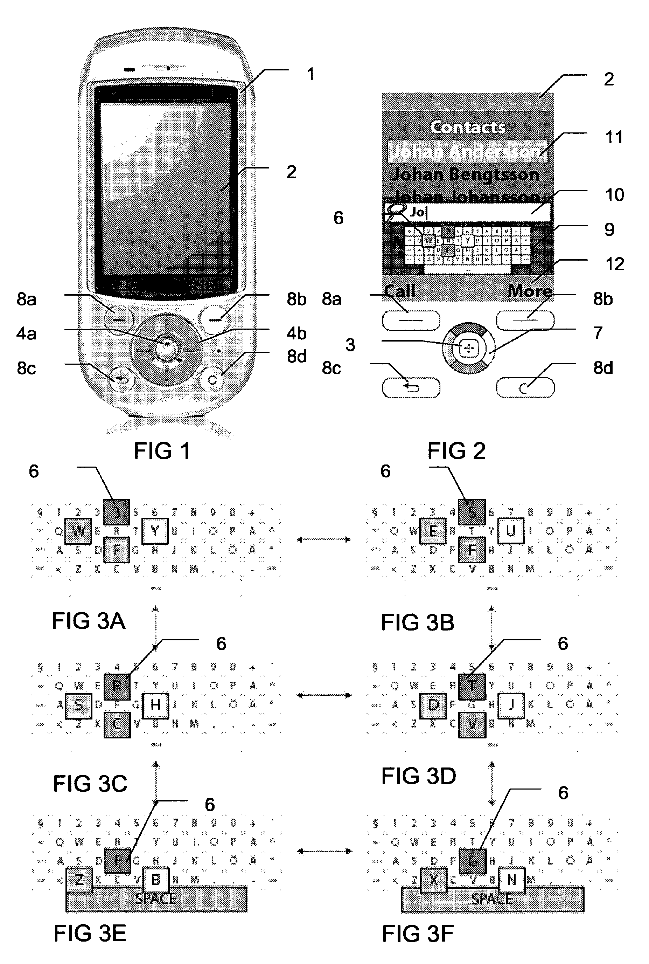

The problem with the approach where a highlight is moved between items, is that when a list or matrix grows to more than 10 to 15 items it may take some time to move the highlight to the item that you are looking for. A specific problem is inputting text with no numeric keys available. A common solution for this is to bring up a virtual, matrix spaced keyboard, but those are often slow as they are typically big matrixes with many options, and therefore there is often a long distance to navigate to the character you want to enter. This problem is more pronounced with phones having different form factors, such as jack knife and slider phones, where the ordinary number keypad cannot be accessed during parts of the interaction as the phone is "closed', in other words, the key pad is hidden. However, when the phone is closed, the softkeys and the navigation device are still accessible. A typical jack knife phone is shown in fig. 1.

Known solutions for navigating in lists and matrixes effectively include number key short cuts. For example, in some mobile phones the keys with 1-9, # and * are used as short cuts or accelerators to access items in the corresponding list or matrix position, according to a numeric order or physical location of the item on the screen. The problem with this approach is that there are only twelve keys that can be assigned, and that they are not always accessible, such as with a closed slider or jack knife phone.

A similar solution is used in the phone book, where letters selected by means of the ordinary keys are used for single letter or multi letter search. Another solution is that the speeds with which the highlight moves in the lists and matrixes are increased if a direction key is pressed and held.

One text input navigation system from Magellan is based on an 8-way navigation key. The keyboard is divided in 8 sections, each with 8 sub-sections, i.e. 8 character keys. For the first level, as soon as one direction is selected with the navigation device, the corresponding sub-section is selected, and by pressing a direction on the navigation key again a corresponding character is selected.

### Summary of the invention

The present invention proposes to solve this problem with an apparatus according to claim 1.

### Brief description of the drawings

The invention will be described in detail below with reference to the attached drawings, in which:
Fig. 1 is a front view of a typical mobile telephone of the jack knife type,
Fig. 2 is a schematic front view of a first embodiment of the invention,
Figs. 3A to 3F are views of a virtual keyboard with a pattern of keys highlighted at different locations,
Fig. 4 is a schematic front view of a second embodiment of the invention, and
Fig. 5 is a schematic front view of a third embodiment of the invention.

### Detailed description of preferred embodiments

The invention will be described with a mobile telephone as an example. The invention is equally applicable to other devices, such as pagers, communicators, smart phones and electronic organisers. This disclosure will concentrate on the technical aspects relevant to the invention, while other functions necessary for the operation of the device may be conventional.

Fig. 1 shows an example of a mobile telephone of the jack knife type. The apparatus 1 has a relatively large display unit with a screen 2, a navigation device here represented by a centre button 4a and a ring 4b that may be activated in four different directions, up, down, right and left. The apparatus also includes a number of function keys, a top left key 8a and a top right key 8b, usually having a function depending on the context, and two lower keys, a back key 8c and a clear key 8d.

Of course, the apparatus includes a control unit (not shown) managing operations of the apparatus and capable of controlling the display unit when the user inputs commands by means of the input means. The apparatus 1 also has the ordinary number keys 1-9, * and #. However, these keys are hidden in the closed state of the apparatus. The user has to open the phone by rotating the lower part relative to the upper part, shown in the figure. In a mobile phone of the slider type, the number keys are of course placed on a slidable part.

Generally, the present invention includes three different embodiments of the suggested solution. All three address matrix navigation in general, and are used to navigate and interact with a virtual on-screen QWERTY keyboard in an apparatus in a closed mode. The same principle can be used for other navigations as well, such as navigating in a desktop type of display with general items.

The first embodiment is described with reference to fig. 2 and figs. 3A to 3F. In this embodiment, a number of dedicated selection keys have been provided on the apparatus.

Fig. 2 shows the display 2 with keys below. The display 2 is currently showing part of a contact list 11. A virtual QWERTY keyboard 9, with all the usual characters, is shown in one field. Already selected characters are shown in a search field 10, and one row of the contact list 11, corresponding to the search field 10, is highlighted. The apparatus includes the usual function keys 8a to 8d, of which the two top keys 8a and 8b have the softkey functions as displayed in the softkey field 12.

In this embodiment, four items 6 are highlighted in a predetermined pattern, and the input means is enhanced with four dedicated selection keys 7 to enable the user to select the different highlighted items 6. Each of the selection keys is associated with one of the items 6 according to their positions. Thus, the top selection key 7 corresponds to the top highlighted item etc. The highlights and the keys 7 may also be colour coded, such that each highlight has the same colour as the selection key that is mapped to it.

When one of the election keys 7 is pressed, the character highlighted by the corresponding highlight is added to the search field 10 and what is highlighted in the contact list 11 is preferably updated instantly.

When the user interacts with the navigation device, in the case shown a joystick 3, all highlights are moved around in parallel, as shown in figures 3A to 3F. For example, if the user moves the joystick 3 to the right, or all four highlights are moved one step to the right, as in fig. 3A to 3B, if the joystick is moved down, all highlights are moved down one step, as between fig. 3A to 3C, and 3C to 3E, and fig. 3B to 3D, and fig. 3D to 3F.

Suitably, the pattern of the highlights 6 are arranged as shown in the figures 3A to 3F, in other words, the distance between the left and right highlight is four steps, and between the top and lower highlight is two steps. Other arrangements are of course also possible, depending on the matrix displayed.

The added multiple highlights have made this input much faster and more efficient, as the distance to the character you want to type is always one step less, or at least as close, then if you have only one highlight.

If the user e.g. wants to write the name "Erik" he would only need to move the joystick two times after moving the left highlight to the "E". The sequence would be:
1. move the highlights so that the left highlight is on "E"
2. press the left selection key-"E" is typed in
3. move the highlights one step to the right
4. press the left key to enter "R"-"ER" is typed in
5. press the right key to enter "I-"ERI" is typed in
6. move the highlights one step down
7. press the right key to enter"K-"ERIK" is typed in

The same sequence with only one highlight would require six joystick presses after first moving the highlight to "E".

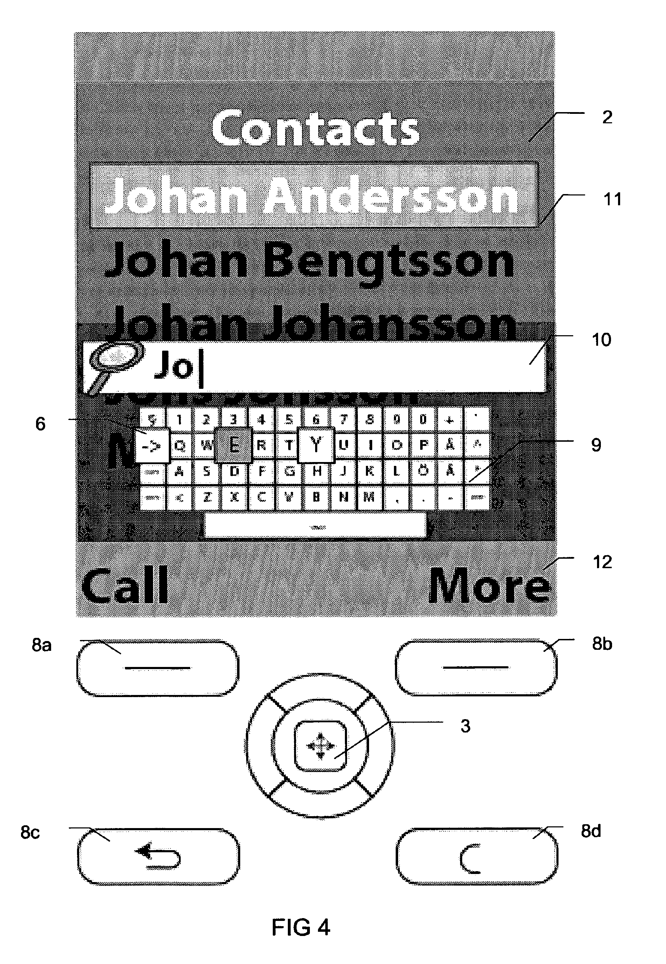

The second embodiment of the invention is described with reference to fig. 4. This embodiment uses the conventional keys, keeping all softkey functionality in the given interaction situation. That is, the call and more functions are maintained. Instead, extra softkey functions are assigned to the navigation device, here illustrated by means of a joystick 3. A navigation device with a centre button and a ring as shown in fig. 1 could also be used. No dedicated selection keys have to be added.

The display 2 contains the same fields as discussed with reference to fig. 2, denoted by the same reference numerals. However, the highlight pattern 6 here only comprises three keys. The pattern comprises one main highlight and two weaker highlights, placed on a horizontal line. The main highlight marks the character that will be entered when pressing centre-select on the navigation device. The main highlight is moved by moving the navigation device to the right or the left.

The pattern 6 is moved by means of the joystick 3. The joystick 3 also has an added function of confirming the position of the pattern 6 with a press-centre-select.

Thus, in this second embodiment, the selection of an actual character is a two step action:
first, after moving the pattern to a wanted position, which highlights the character you want to enter with any of the highlights, centre-select on the joystick is pressed to confirm the position of the pattern,
second, make sure that the main highlight, i.e. the darker one, is on the character that you want to enter, then press centre-select again.

To write "ERIK" would in this case take three joystick moves:
1. press joystick-centre to confirm position
2. press joystick-centre to select "E"
3. move joystick right
4. press joystick-centre to confirm position
5. press joystick-centre to select "R"
6. move joystick right
7. press joystick-centre to confirm position
8. move joystick right to move the main highlight
9. press joystick-centre to select"I"
10. move joystick down
11. press joystick-centre to confirm position
12. press joystick-centre to select"K"

In this second embodiment, multiple highlights may be used without having a dedicated key to each highlight. However, compared to the first embodiment, the number of presses on the selection key is increased.

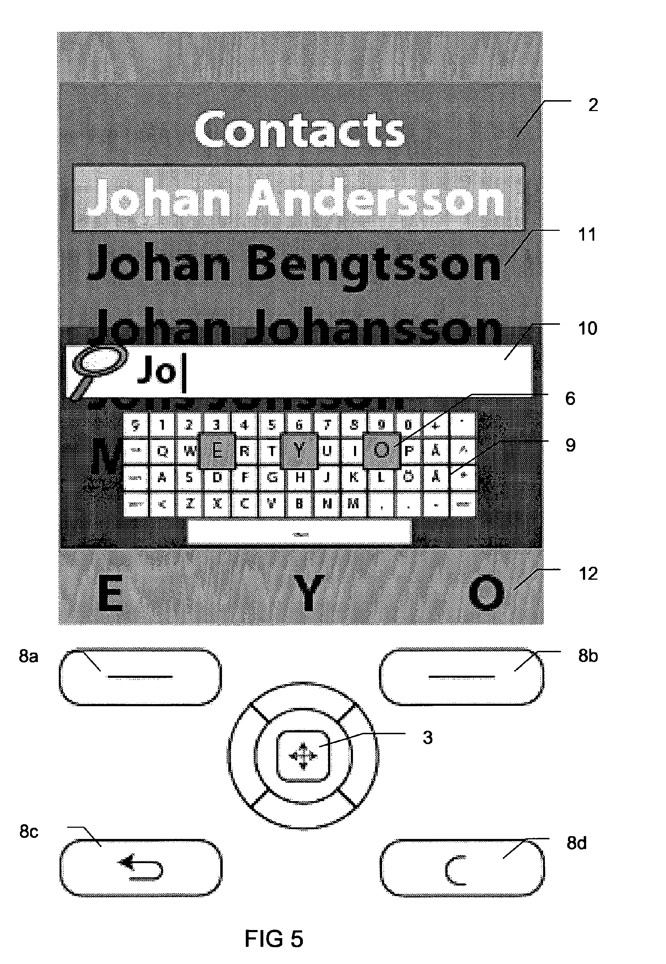

A third embodiment of the present invention is described with reference to fig. 5. The third embodiment uses the conventional keys, but introduces an input mode, into which the user will have to enter before starting the text input. When the text input is done, the back key 8c is used to exit the input mode, enabling usual softkey functions of the keys 8a and 8b.

As may be seen from fig. 5, the display 2 contains the same fields as the previous embodiments, denoted by the same reference numerals. In the third embodiment, the user has to enter an input mode before starting the input, which means that both the navigation means, e.g. the joystick 3, and the already existing softkeys 8a and 8b can be used as selection keys. The input mode may for example be reached in the normal mode as an option in the "more" menu, reached be means of the top-right softkey 8b.

Like the second embodiment, the highlight pattern 6 consists of three highlighted items, placed on a horizontal line. In this embodiment, the joystick 3 and the two softkeys 8a and 8b are assigned to one highlight each. The functions of the keys are shown in the softkey field 12, as shown in fig. 5. To leave the mode, the user e.g. has to press the back key 8c to be able to perform an action of a found contact, when the softkeys 8a and 8b has been reassigned to the functions "Call" and "More" (as shown in fig. 4).

To write "ERIK" would in this case, again, take three joystick moves:
1. press left softkey to select "E"
2. move joystick right
3. press left softkey to select "R"
4. move joystick right
5. press joystick-centre to select"I"
6. move joystick down
7. press joystick-centre to select"K"

Like the other embodiments, the highlights 6 are moved in parallel, i.e. maintaining the distance between the highlighted items.

The present invention results in an efficient navigation in lists and matrixes. Fewer movements of the navigation device are required to highlight an item, and fewer actions are required to select a highlighted item. A person skilled in the art will realise that the invention may be implemented by any suitable combination of hardware and software. Even though some embodiments have been described in detail, it will be appreciated that the invention may be varied within the scope of the attached claims. For instance, the exact form of navigation device and placement of the function keys may be varied and adapted to a particular apparatus or use. The scope of the invention is only limited by the claims below.

## Claims

1. An apparatus (1) comprising:
a display unit (2) with a screen capable of displaying lists and matrices (9) with highlighted selectable items (6);
a control unit managing operations of the apparatus (1) and capable of controlling the display unit (2);
input means (3, 4a, 4b, 7, 8a, 8b, 8c, 8d) connected to the control unit and comprising a navigation device (3, 4a, 4b) and keys (7, 8a, 8b, 8c, 8d) for moving highlights and selecting items, **characterised in that** the control unit is arranged to cause the display unit (2) to display items of which a number is highlighted in a defined pattern (6), each such highlighted item representing a selectable item, and being associated with at least one selection key of the input means (3, 4a, 4b, 7, 8a, 8b, 8c, 8d), and the highlight pattern (6) being movable around in parallel (3a, 3f) amongst all displayed items by means of the navigation device (3, 4a, 4b).

2. An apparatus according to claim 1, wherein the input means comprises a number of dedicated selection keys (7).

3. An apparatus according to claim 2, wherein the input means comprises dedicated selection keys (7) placed around the navigation device (3), and the highlight pattern (6) is reflecting the placement of the selection keys (7).

4. An apparatus according to claim 3, wherein the highlight pattern (6) comprises four highlighted selectable items, and the input means comprises four dedicated selection keys (7).

5. An apparatus according to claim 1, wherein the navigation device (3, 4a, 4b) is assigned softkey functions to act as selection key.

6. An apparatus according to claim 5, wherein the position of the highlight pattern (6) first is selected and confirmed by means of the navigation device (3, 4a, 4b), then one of the highlighted selectable items are selected by means of the navigation device (3, 4a, 4b).

7. An apparatus according to claim 6, wherein the highlight pattern (6) comprises three highlighted selectable items.

8. An apparatus according to claim 1, wherein the input means comprises function keys (3, 4a, 4b, 8a, 8b), of which a number are assigned softkey functions to act as selection keys.

9. An apparatus according to claim 8, wherein the highlight pattern (6) comprises three highlighted selectable items, and the softkey functions to act as selection keys are assigned to two function keys (8a, 8b) and to the navigation device (3).

10. An apparatus according to any one of the previous claims, wherein each selectable item is highlighted with a different appearance, such as colour.

11. An apparatus according to any one of the previous claims, wherein the apparatus is a portable telephone (1), a pager, a communicator, a smart phone, or an electronic organiser.

## Patentansprüche

1. Gerät (1), mit:
einer Anzeigeeinheit (2) mit einem Schirm, der in der Lage ist Listen und Matrizen (9) mit hervorgehobenen, auswählbaren Gegenständen (6) anzuzeigen;
einer Steuereinheit, die Operationen des Gerätes (1) verwaltet und in der Lage ist, die Anzeigeeinheit (2) zu steuern;
einer Eingabevorrichtung (3, 4a, 4b, 7, 8a, 8b, 8c, 8d), die mit der Steuereinheit verbunden ist und ein Navigationsgerät (3, 4a, 4b) und Tasten (7, 8a, 8b, 8c, 8d) zum Bewegen von Hervorhebungen uns Auswählen von Gegenständen umfasst, **dadurch gekennzeichnet, dass** die Steuereinheit angepasst ist, die Anzeigeeinheit (2) zu veranlassen, Gegenstände anzuzeigen, von denen eine Anzahl in einem definierten Muster (6) hervorgehoben ist, wobei jeder derartig hervorgehobene Gegenstand einen auswählbaren Gegenstand darstellt und mit zumindest einer Auswahltaste der Eingabevorrichtung (3, 4a, 4b, 7, 8a, 8b, 8c, 8d) verknüpft ist, und das hervorgehobene Muster (6) parallel (3a, 3f) unter allen angezeigten Gegenständen mittels des Navigationsgerätes (3, 4a, 4b) herum bewegbar ist.

2. Gerät nach Anspruch 1, wobei die Eingabevorrichtung eine Anzahl dedizierter Auswahltasten (7) umfasst.

3. Gerät nach Anspruch 2, wobei die Eingabevorrichtung dedizierte Auswahltasten (7) umfasst, die um das Navigationsgerät (3) herum angeordnet sind und das hervorgehobene Muster (6) die Anordnung der Auswahltasten (7) widerspiegelt.

4. Gerät nach Anspruch 3, wobei das hervorgehobene Muster (6) vier hervorgehobene, auswählbare Gegenstände umfasst und die Eingabevorrichtung vier dedizierte Auswahltasten (7) umfasst.

5. Gerät nach Anspruch 1, wobei dem Navigationsgerät (3, 4a, 4b) Softkey-Funktionen zugeordnet sind, um als Auswahltaste zu wirken.

6. Gerät nach Anspruch 5, wobei die Position des hervorgehobenen Musters (6) zuerst ausgewählt wird und mittels des Navigationsgerätes (3, 4a, 4b) bestätigt wird, dann einer der hervorgehobenen, auswählbaren Gegenstände mittels des Navigationsgerätes (3, 4a, 4b) ausgewählt wird.

7. Gerät nach Anspruch 6, wobei das hervorgehobene Muster (6) drei hervorgehobene, auswählbare Gegenstände umfasst.

8. Gerät nach Anspruch 1, wobei die Eingabevorrichtung Funktionstasten (3, 4a, 4b, 8a, 8b) umfasst, von denen einer Anzahl Softkey-Funktionen zugeordnet sind, um als Auswahltasten zu wirken.

9. Gerät nach Anspruch 8, wobei das hervorgehobene Muster (6) drei hervorgehobene, auswählbare Gegenstände umfasst und die Softkey-Funktionen, die als Auswahltasten wirken sollen, zwei Funktionstasten (8a, 8b) und dem Navigationsgerät (3) zugeordnet sind.

10. Gerät nach einem der vorangehenden Ansprüche, wobei jeder auswählbare Gegenstand mit einer unterschiedlichen Erscheinung hervorgehoben wird, wie zum Beispiel einer Farbe.

11. Gerät nach einem der vorangehenden Ansprüche, wobei das Gerät ein tragbares Telefon (1), ein Funkrufempfänger, ein Kommunikator, ein Smart-Phone oder ein elektronischer Organisierer ist.

## Revendications

1. Appareil (1) comprenant :
une unité d'affichage (2) avec un écran en mesure d'afficher des listes et des matrices (9) avec des éléments en surbrillance pouvant être sélectionnés (6) ;
une unité de commande gérant les opérations de l'appareil (1) et en mesure de commander l'unité d'affichage (2) ;
des moyens de saisie (3, 4a, 4b, 7, 8a, 8b, 8c, 8d) connectés à l'unité de commande et comprenant un dispositif de navigation (3, 4a, 4b) et des touches (7, 8a, 8b, 8c, 8d), destinés à déplacer les surbrillances et à sélectionner des éléments ; **caractérisé en ce que** l'unité de commande est conçue pour commander à l'unité d'affichage (2) d'afficher des éléments dont un certain nombre est affiché en surbrillance selon un motif défini (6), chacun desdits éléments en surbrillance représentant un élément pouvant être sélectionné et étant associé à au moins une touche de sélection parmi les moyens de saisie (3, 4a, 4b, 7, 8a, 8b, 8c, 8d) et le motif de surbrillance (6) pouvant être déplacé en parallèle (3a, 3f) parmi tous les éléments affichés à l'aide du dispositif de navigation (3, 4a, 4b).

2. Appareil selon la revendication 1, dans lequel les moyens de saisie comprennent un certain nombre de touches de sélection spécialisées (7).

3. Appareil selon la revendication 2, dans lequel les moyens de saisie comprennent des touches de sélection spécialisées (7) placées autour du dispositif de navigation (3), le motif en surbrillance (6) reflétant le placement des touches de sélection (7).

4. Appareil selon la revendication 3, dans lequel le motif en surbrillance (6) comprend quatre éléments en surbrillance pouvant être sélectionnés et les moyens d'entrée comprennent quatre touches de sélection spécialisées (7).

5. Appareil selon la revendication 1, dans lequel des fonctionnalités de touches de fonction logicielles sont attribuées au dispositif de navigation (3, 4a, 4b) afin qu'il joue le rôle de touche de sélection.

6. Appareil selon la revendication 5, dans lequel la position du motif en surbrillance (6) est d'abord sélectionnée et confirmée à l'aide du dispositif de navigation (3, 4a, 4b), après quoi l'un des éléments en surbrillance pouvant être sélectionnés est sélectionné à l'aide du dispositif de navigation (3, 4a, 4b).

7. Appareil selon la revendication 6, dans lequel le motif en surbrillance (6) comprend trois éléments en surbrillance pouvant être sélectionnés.

8. Appareil selon la revendication 1, dans lequel les moyens de saisie comprennent des touches de fonction (3, 4a, 4b, 8a, 8b), des fonctionnalités de touches de fonction logicielles étant attribuées à un certain nombre d'entre elles pour qu'elles jouent le rôle de touches de sélection.

9. Appareil selon la revendication 8, dans lequel le motif en surbrillance (6) comprend trois éléments en surbrillance pouvant être sélectionnés et les fonctionnalités de touches de fonction logicielles destinées à jouer le rôle de touches de sélection sont attribuées à deux touches de fonction (8a, 8b) et au dispositif de navigation (3).

10. Appareil selon l'une des revendications précédentes, dans lequel chaque élément pouvant être sélectionné est mis en surbrillance avec un aspect différent, tel que la couleur.

11. Appareil selon l'une des revendications précédentes, dans lequel l'appareil est un téléphone portable (1), un boîtier de recherche de personnes, un communicateur personnel, un téléphone intelligent ou un organiseur électronique.
